# EUROPEAN PATENT APPLICATION

(11) **EP 4 338 918 A1**
(43) Date of publication of application: **20.03.2024**
(21) Application number: 22824506.4
(22) Date of filing: 14.02.2022
(51) Int. Cl.: B29B 17/04, B02C 23/38, B02C 18/00, B02C 19/00, B02C 19/18

(54) **COMPOSITE MATERIAL PULVERIZATION DEVICE, MOVING BODY, AND COMPOSITE MATERIAL PULVERIZATION METHOD**

(30) Priority: 16.06.2021 JP 2021099889
(71) Applicant: Mitsubishi Heavy Industries, Ltd., Tokyo 100-8332 (JP)
(72) Inventor: KANEMASU, Masayuki, Tokyo 100-8332 (JP); NISHIGAKI, Makoto, Tokyo 100-8332 (JP); YOSHIYAMA, Ryuji, Tokyo 100-8332 (JP); INOUE, Tomoaki, Tokyo 100-8332 (JP); MATSUMOTO, Shinji, Tokyo 100-8332 (JP); HIRATA, Takehiko, Tokyo 100-8332 (JP); YUGE, Atsushi, Tokyo 100-8332 (JP)
(74) Representative: Studio Torta S.p.A.
(86) International application number: PCT/JP2022/005680
(87) International publication number: WO 2022/264505

(57) **Abstract**

Provided are a composite material crushing apparatus, a moving unit, and a composite material crushing method that can sufficiently reduce the volume of a long composite material without increasing costs. Provided is a composite material crushing apparatus including: a cutting part (20) configured to cut, into pieces, a long composite material (200) formed of a resin material containing a fiber base material; a conveying part (10) configured to transport the pieces (201) cut by the cutting part (20); and a crushing part (30) configured to crush the pieces (201) conveyed by the conveying part (10).

## Description

### [Technical Field]

The present disclosure relates to a composite material crushing apparatus, a moving unit, and a composite material crushing method.

### [Background Art]

Conventionally, in dismantling a long composite material of Fiber Reinforced Plastics (FRP) waste ship or the like, it is known to shear the long composite material by a construction machine such as a power shovel or cut the long composite material by a wire saw cutting device or the like (for example, see Patent Literature 1). Patent Literature 1 discloses using a wire saw forced with predetermined tension to cut a cutting target object fixed to a main frame.

### [Citation List]

### [Patent Literature]

[PTL 1]
Japanese Patent No. 5720037

### [Summary of Invention]

### [Technical Problem]

However, by merely cutting a long composite material at a predetermined position in the longitudinal direction by a wire saw as disclosed in Patent Literature 1, it is not possible to sufficiently reduce the volume of the long composite material because the size of the cut composite materials is relatively large. Further, to reduce the volume after cutting a composite material, it is required to carry the cut composite materials to a crushing apparatus or the like for further reducing the size of the composite materials, which will increase the cost in carrying the composite materials.

The present disclosure has been made in view of such circumstances and intends to provide a composite material crushing apparatus, a moving unit, and a composite material crushing method that can sufficiently reduce the volume of a long composite material without increasing costs.

### [Solution to Problem]

A composite material crushing apparatus according to the present disclosure includes: a dividing part configured to divide a long composite material into pieces, the composite material being formed of a resin material containing a fiber base material; a conveying part configured to convey the pieces divided by the dividing part; and a crushing part configured to crush the pieces conveyed by the conveying part.

A composite material crushing method according to the present disclosure includes: a dividing step of dividing a long composite material into pieces, the composite material being formed of a resin material containing a fiber base material; a transport step of transporting the pieces divided by the dividing step; and a crushing step of crushing the pieces transported by the transport step.

### [Advantageous Effects of Invention]

According to the present disclosure, a composite material crushing apparatus, a moving unit, and a composite material crushing method that can sufficiently reduce the volume of a long composite material can be provided.

### [Brief Description of Drawings]

[Fig. 1]

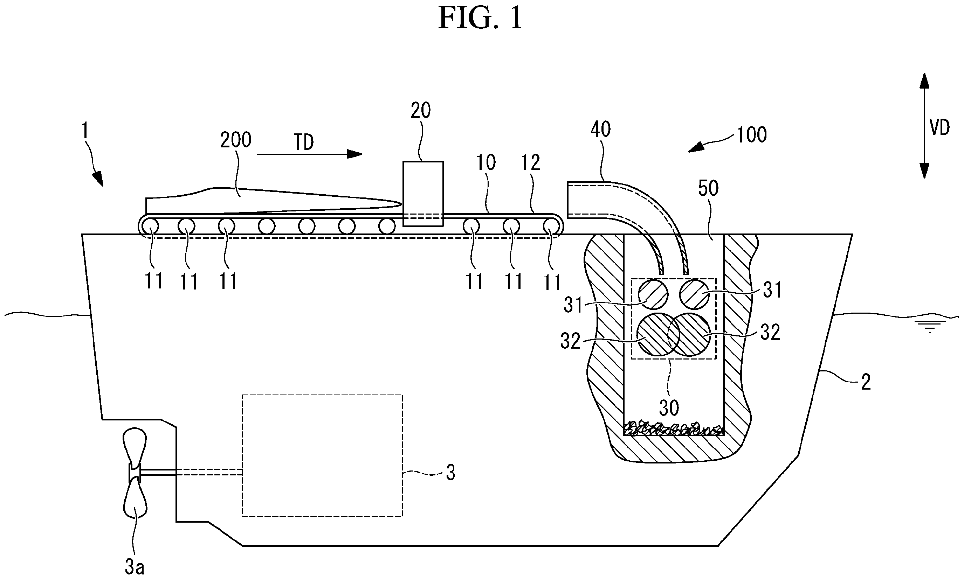

   Fig. 1 is a partial sectional view illustrating a moving unit having a composite material crushing apparatus according to a first embodiment of the present disclosure, which illustrates a state before a composite material is cut.
[Fig. 2]

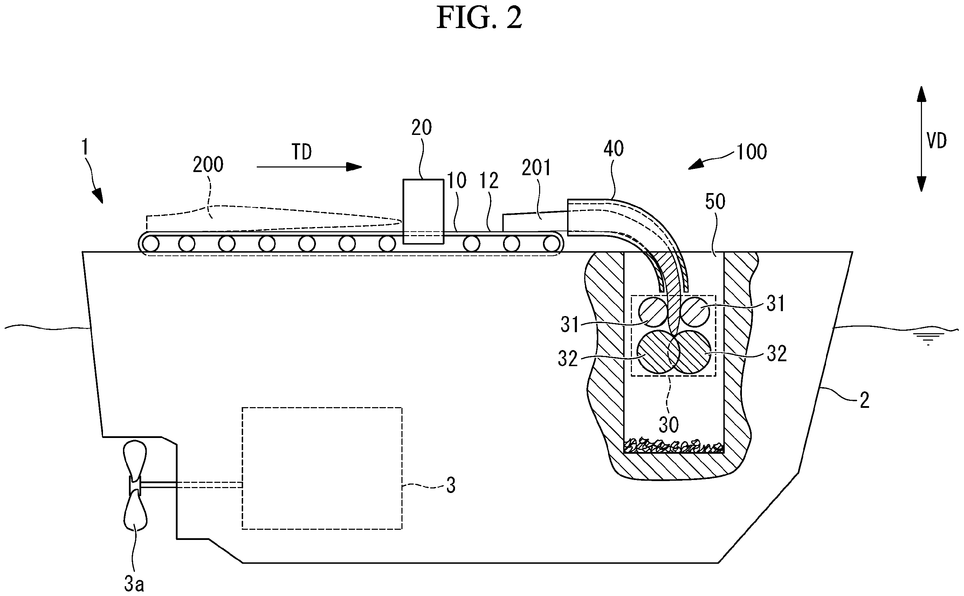

   Fig. 2 is a partial sectional view illustrating the moving unit having the composite material crushing apparatus according to the first embodiment of the present disclosure, which illustrates a state before a composite material is crushed.
[Fig. 3]

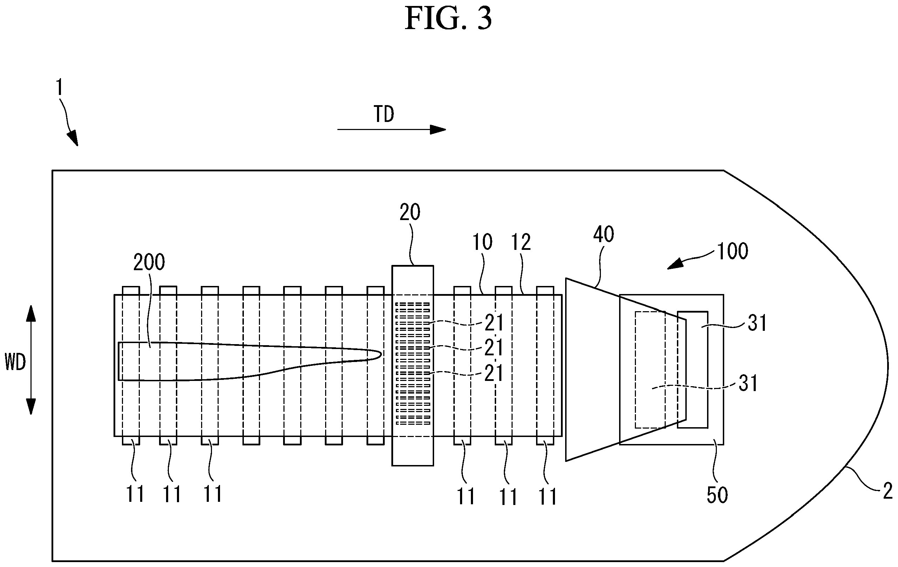

   Fig. 3 is a plan view of the composite material crushing apparatus illustrated in Fig. 1 when viewed from above.
[Fig. 4]

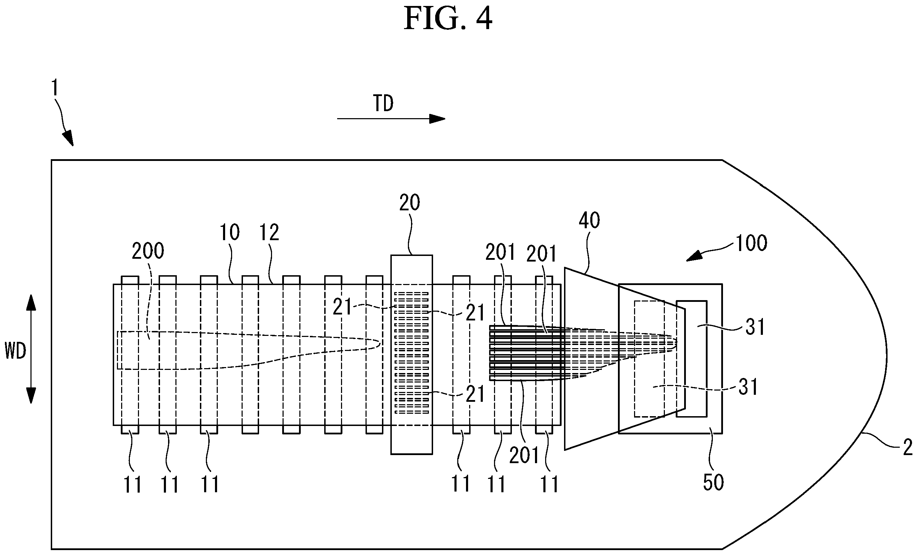

   Fig. 4 is a top view of the composite material crushing apparatus illustrated in Fig. 2 when viewed from above.
[Fig. 5]

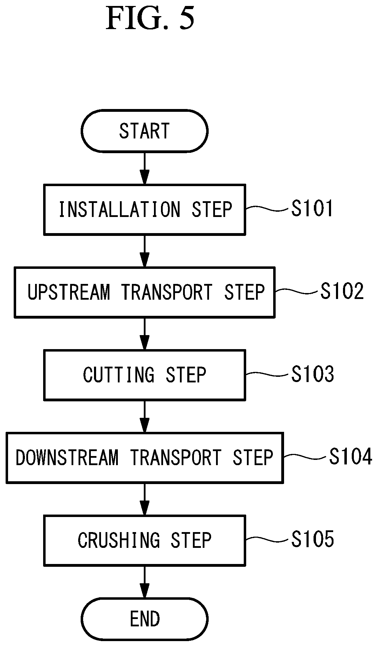

   Fig. 5 is a flowchart illustrating a composite material cutting method of the first embodiment of the present disclosure.
[Fig. 6]

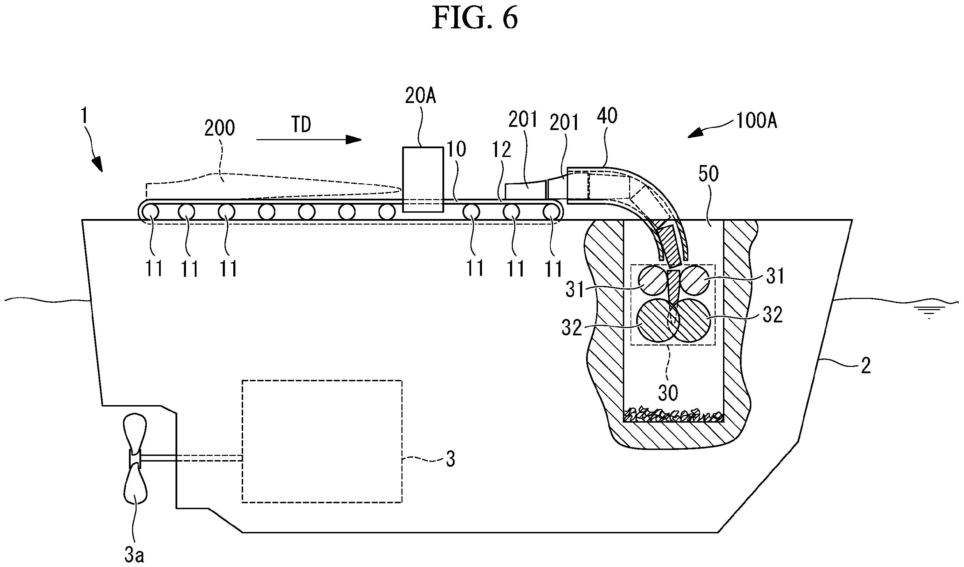

   Fig. 6 is a partial sectional view illustrating a moving unit having a composite material crushing apparatus according to a second embodiment of the present disclosure.
[Fig. 7]

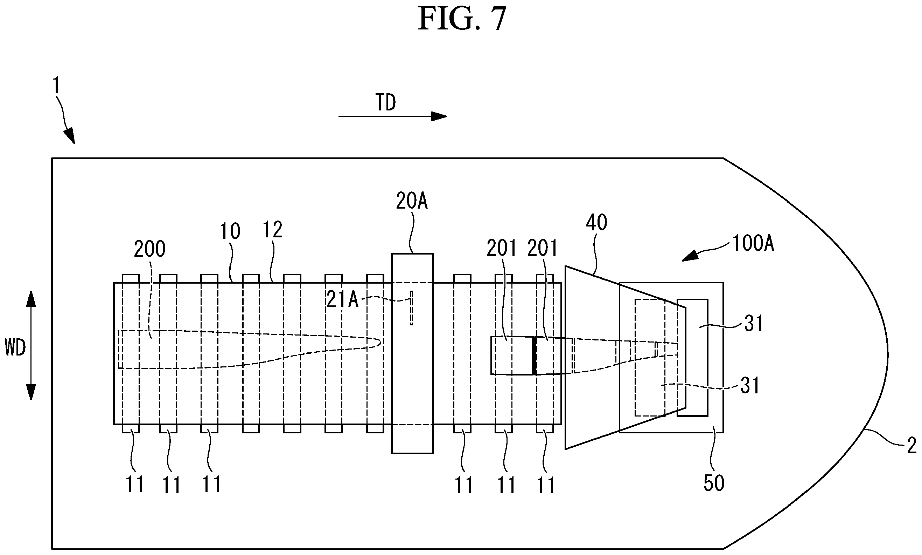

   Fig. 7 is a plan view of the composite material crushing apparatus illustrated in Fig. 6 when viewed from above.
[Fig. 8]

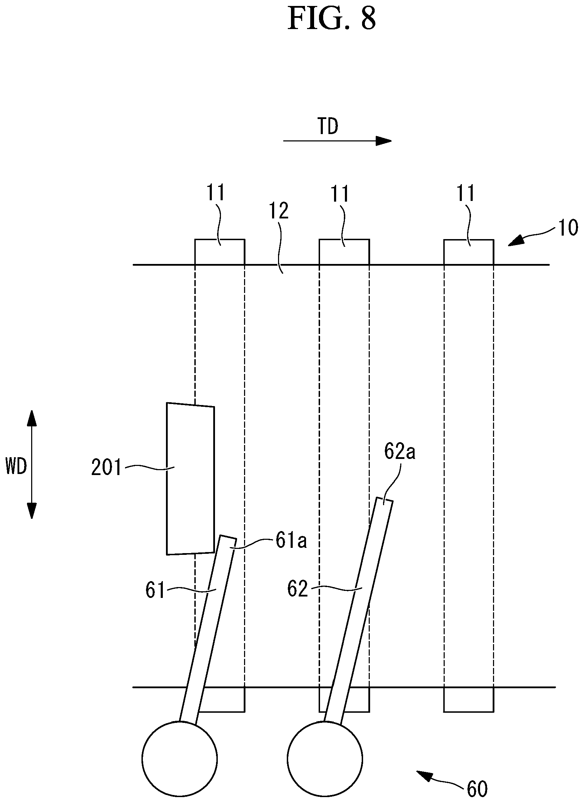

   Fig. 8 is a plan view illustrating a modified example for the second embodiment of the present disclosure.
[Fig. 9]

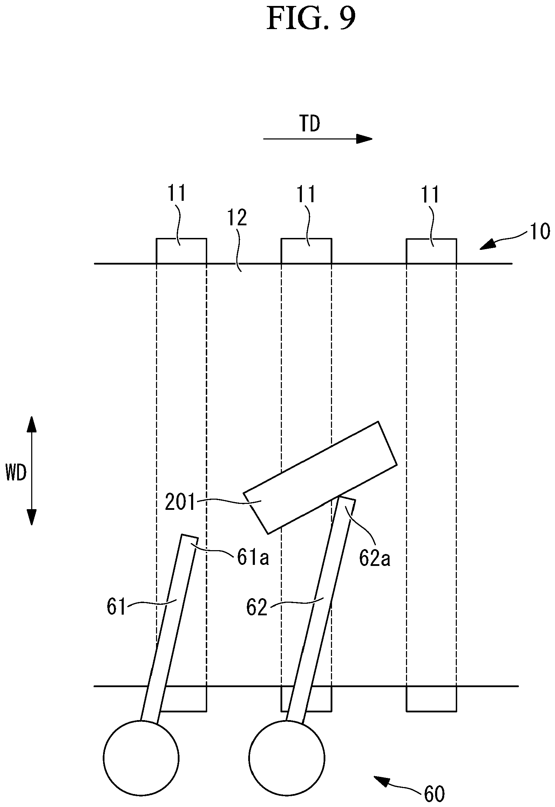

   Fig. 9 is a plan view illustrating a modified example for the second embodiment of the present disclosure.
[Fig. 10]

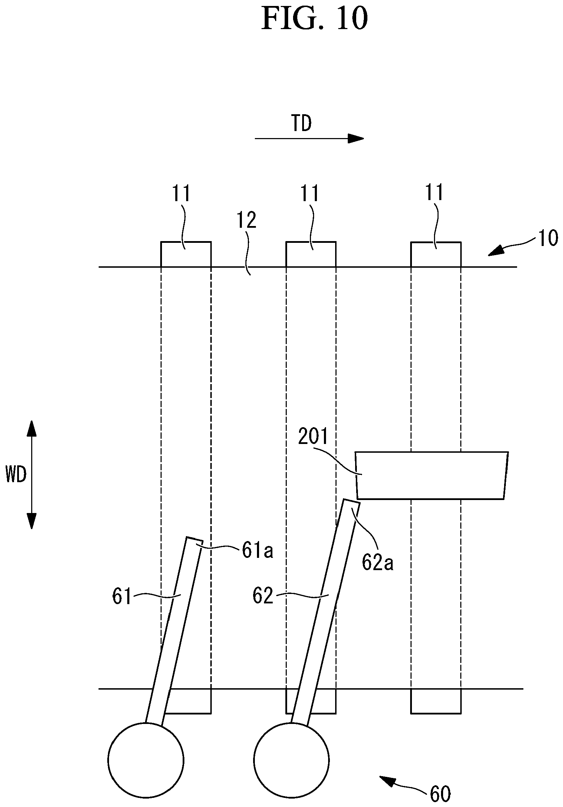

   Fig. 10 is a plan view illustrating a modified example for the second embodiment of the present disclosure.
[Fig. 11]

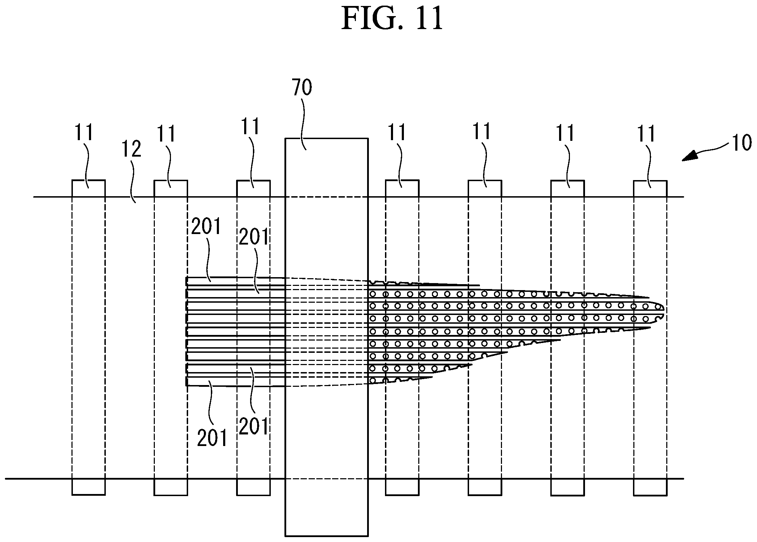

   Fig. 11 is a plan view of a destruction part of the composite material crushing apparatus according to a first example of a third embodiment of the present disclosure when viewed from above.
[Fig. 12]

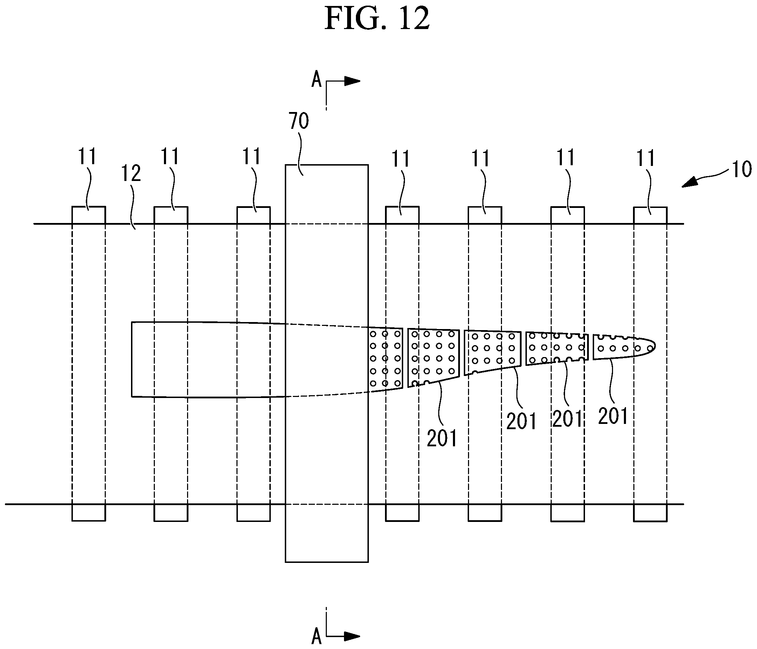

   Fig. 12 is a plan view of a destruction part of the composite material crushing apparatus according to a second example of the third embodiment of the present disclosure when viewed from above.
[Fig. 13]

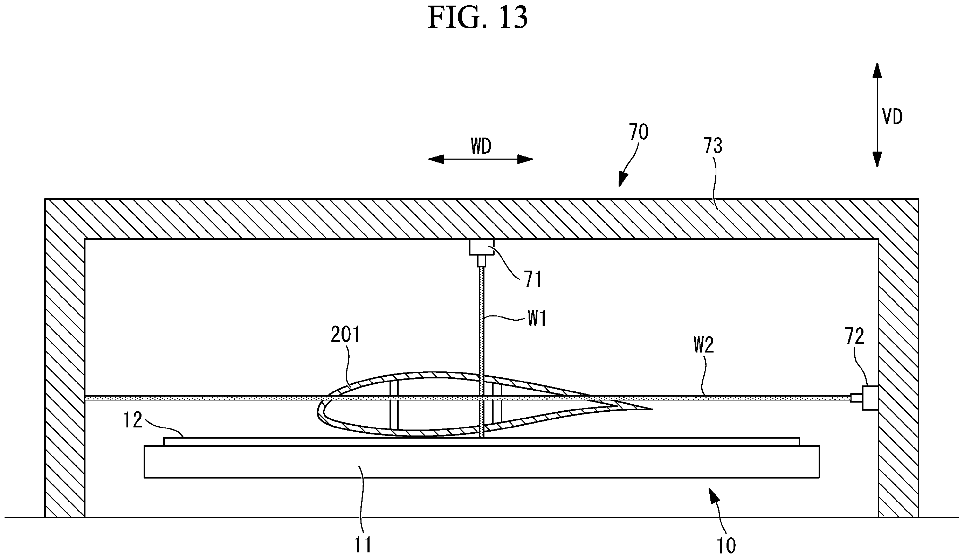

   Fig. 13 is a sectional view viewed along an arrow A-A illustrating the destruction part of Fig. 12.
[Fig. 14]

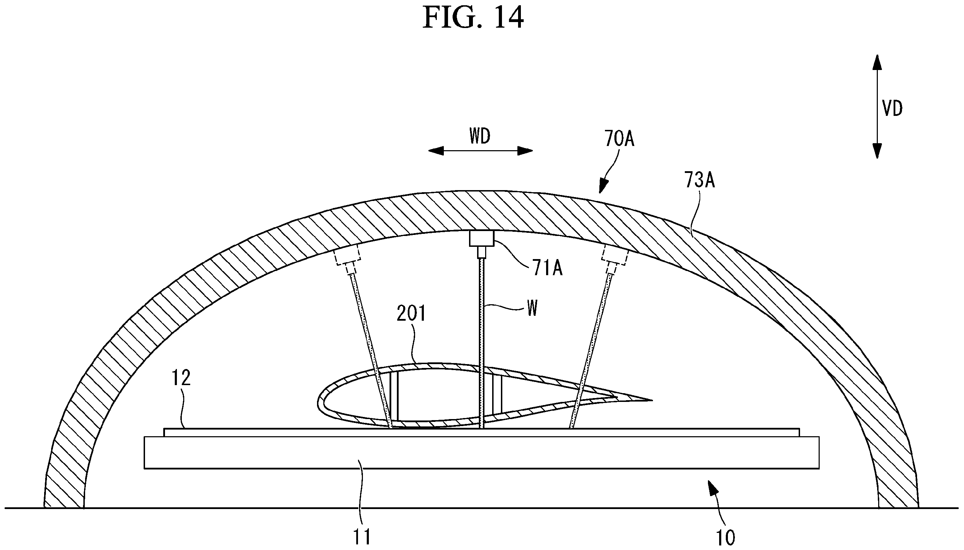

   Fig. 14 is a sectional view illustrating a modified example of the destruction part.
[Fig. 15]

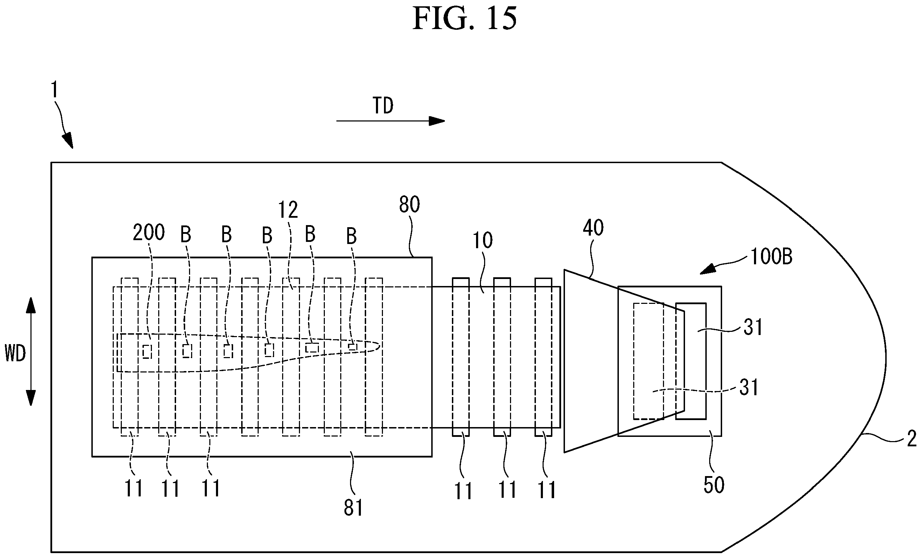

   Fig. 15 is a plan view of a composite material crushing apparatus according to a fourth embodiment of the present disclosure when viewed from above.
[Fig. 16]

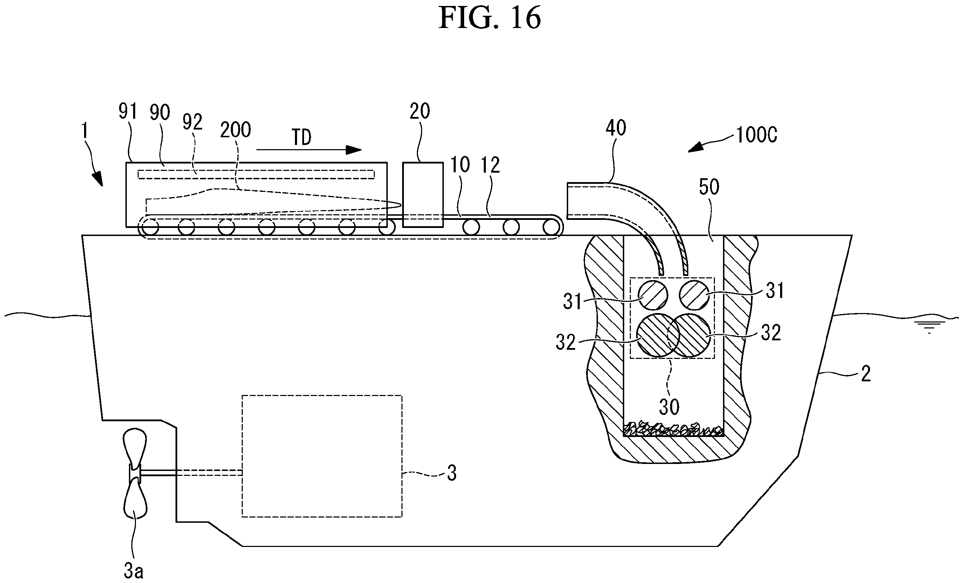

   Fig. 16 is a partial sectional view illustrating a moving unit having a composite material crushing apparatus according to a fifth embodiment of the present disclosure.
[Fig. 17]

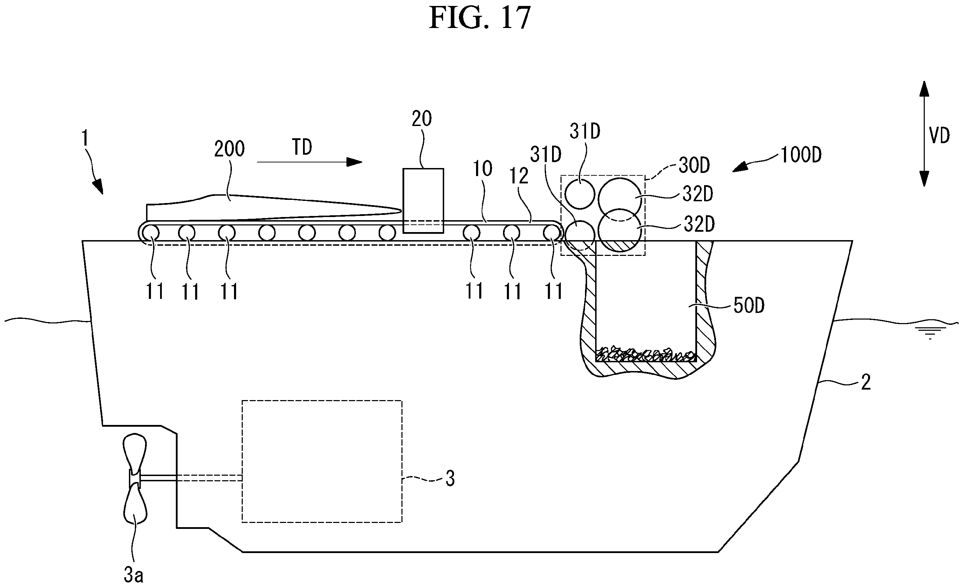

   Fig. 17 is a partial sectional view illustrating a moving unit having a composite material crushing apparatus according to a sixth embodiment of the present disclosure.

### [Description of Embodiments]

### [First Embodiment]

Hereinafter, the composite material crushing apparatus 100 according to the first embodiment of the present disclosure will be described with reference to the drawings. FIGS. 1 and 2 are partial cross-sectional views showing a ship (moving unit) 1 having a composite material crushing apparatus 100 according to the first embodiment of the present disclosure. Fig. 1 shows a state before the composite 200 is cut, and Fig. 2 shows a state before the composite 200 is ground. Fig. 3 is a top view of the composite material crushing apparatus 100 shown in Fig. 1. Fig. 4 is a top view of the composite material crushing apparatus 100 shown in Fig. 2.

The volume reduction processing apparatus 100 of the present embodiment is an apparatus for reducing the volume of the long composite material 200. The long composite material 200 is an airfoil member used in aircraft wings and renewable energy power generation, for example, wind turbines and tidal power generators. The composite material 200 is formed of a resin material including a fiber base material. The fiber base material is, for example, a member in which a sheet formed of a reinforcing fiber material such as carbon fiber or glass fiber is laminated over a plurality of layers. The fiber base material may be a prepreg previously impregnated or partially impregnated with a resin material, or a combination of the prepreg and the reinforcing fiber material.

The resin material is, for example, an epoxy resin; a thermosetting resin material such as unsaturated polyester, vinyl ester, phenol, cyanate ester, polyimide, or the like; or a thermoplastic resin such as polyether ether ketone (PEEK), polyethylene terephthalate (PET), polybutylene terephthalate (PBT), nylon 6 (PA6), nylon 66 (PA66), polyphenylene sulfide (PPS), polyetherimide (PEI), polyether ketone ketone (PEKK), or the like.

As shown in FIG. 1, the ship 1 of the present embodiment has a composite material crushing apparatus 100, a body 2 in which the composite material crushing apparatus 100 is installed, and an internal combustion engine (thrust generating device) 3 generating thrust for moving the body 2. The internal combustion engine 3 rotates the screw 3a to obtain a thrust force for moving the main body 2.

As illustrated in Fig. 1, the composite material crushing apparatus 100 has a conveying part 10, a cutting part (dividing part) 20, a crushing part 30, a conveying guide 40, and a collection part 50.

The conveying part 10 is a device that conveys the composite material 200. As illustrated in Fig. 1, the conveying part 10 has a plurality of rollers 11 and a belt 12 stretched around the plurality of rollers 11. The conveying part 10 transmits drive force from the plurality of rollers 11 to the belt 12 and conveys the composite material 200 to the cutting part 20 along a transport direction TD. Further, the conveying part 10 conveys pieces of the composite material 200, which have been cut by the cutting part 20, toward the crushing part 30. Note that the conveying part 10 may be a part that conveys the composite material 200 by using only the rollers 11 without having the belt 12.

The cutting part 20 is a device that cuts (divides) the composite material 200 into pieces (for example, the length thereof in the width direction WD is less than or equal to 100 mm). As illustrated in Fig. 3 and Fig. 4, the cutting part 20 has a plurality of cutting members 21 each extending in the transport direction. The cutting members 21 are arranged spaced apart from each other along the width direction WD orthogonal to the transport direction TD. Each cutting member 21 is, for example, a rounded circular saw that is rotated about an axis, a belt-like band saw that is rotated about an axis, or a wire stretched around so as to be rotated. As the cutting part 20, a water jet cutting device or a laser cutting device may be employed.

The cutting part 20 is fixed to the body 2 at a predetermined position in the transport direction TD. The composite material 200 conveyed along the transport direction TD by the conveying part 10 is cut at a plurality of positions in the width direction WD along the transport direction TD by the cutting members 21 when passing through the cutting part 20 fixed at the predetermined position in the transport direction TD. In such a way, the cutting part 20 cuts the composite material 200 by the plurality of cutting members 21 and thereby divides the composite material 200 into a plurality of pieces 201.

The crushing part 30 is a device for crushing fragments 201 conveyed by the conveying part 10. As shown in Figs. 1 and 2, the crushing part 30 has a pair of gripping rollers 31 rotating in opposite directions, and a pair of crushing rollers 32 rotating in opposite directions. The pair of gripping rollers 31 are rollers that rotate the pieces 201 of the composite material 200 conveyed through the conveying guide 40 while being tightened by the conveying part 10, and push the pieces 201 into the pair of crushing rollers 32.

A pair of crushing rollers 32 form a device for crushing a piece 201 of a composite material 200 pressed by a pair of gripping rollers 31. A pair of crushing rollers 32 are provided with a plurality of claws (not shown) on the outer peripheral surface thereof, and the pieces 201 of the composite material 200 are crushed by the plurality of claws. The pieces 201 crushed by the pair of crushing rollers 32 are crushed to a size of, for example, an average value of 50 mm or less.

The conveying guide 40 is a casing that guides the pieces 201 of the composite material 200, which have been cut by the cutting part 20, from the conveying part 10 to the crushing part 30. As illustrated in Fig. 1 and Fig. 2, the conveying guide 40 is formed in a circular arc shape in sectional view so as to guide the pieces 201 of the composite material 200, which have been transported horizontally along the transport direction TD, to the collection part 50 extending in the vertical direction VD. The conveying guide 40 guides the horizontally transported composite material 200 downward along the vertical direction VD.

The collection part 50 is arranged inside the body 2 and formed in a cylindrical shape along the vertical direction. The collection part 50 is a device that collects the pieces 201 of the composite material 200 crushed by the crushing part 30.

A composite material crushing method for crushing the composite material 200 by using the composite material crushing apparatus 100 of the present embodiment will now be described with reference to the drawings. Fig. 5 is a flowchart illustrating the composite material crushing method of the present embodiment.

In step S101 (installation step), the composite material 200 is installed to the conveying part 10 upstream in the transport direction TD from the cutting part 20. For example, the composite material 200 is carried to the conveying part 10 while being suspended by a crane (not illustrated) and is then installed to the conveying part 10.

In step S102 (upstream transport step), the composite material 200 installed to the conveying part 10 is conveyed toward the cutting part 20 upstream in the transport direction TD from the cutting part 20.

In step S103 (cutting step), the composite material 200 is cut into the pieces 201 by the cutting part 20. The cutting part 20 cuts the composite material 200 by the cutting members 21 and thereby divides the composite material 200 into the plurality of pieces 201.

In step S104 (downstream transport step), the pieces 201 of the composite material 200 installed to the conveying part 10 are conveyed toward the crushing part 30 downstream in the transport direction TD from the cutting part 20. As illustrated in Fig. 4, the pieces 201 conveyed by the conveying part 10 are guided by the conveying guide 40 and guided into the pair of gripping rollers 31 of the crushing part 30.

In step S105 (crushing step), the piece 201 of the composite material 200 conveyed in step S104 is crushed. A crushing part 30 crushes a piece 201 of a composite material 200 pressed by a pair of gripping rollers 31 using a pair of crushing rollers 32. The pieces 201 crushed by the pair of crushing rollers 32 are recovered by a recovery part 50.

According to the composite material crushing apparatus 100 of the present embodiment described above, the long composite material 200 is divided into the pieces 201 by the cutting part 20. The pieces 201 of the composite material 200, which have been cut by the cutting part 20, are conveyed to the crushing part 30 by the conveying part 10 and crushed by the crushing part 30. Since the composite material 200 cut into the pieces 201 can be conveyed to and crushed by the crushing part 30, it is possible to sufficiently reduce the volume of the long composite material 200 without increasing costs.

Further, in the composite material crushing apparatus 100 of the present embodiment, both the composite material 200 before cut by the cutting part 20 and the pieces 201 of the composite material 200 after cut by the cutting part 20 are conveyed by the conveying part 10. Therefore, both the process of using the cutting part 20 to cut the composite material 200 installed to the conveying part 10 into the pieces 201 and the process of using the crushing part 30 to crush the pieces 201 cut by the cutting part 20 can be performed automatically and continuously without intervention of an operator.

Further, the composite material crushing apparatus 100 of the present embodiment is installed to the watercraft 1 having the internal combustion engine 3 that generates thrust for moving the body 2. It is thus possible to move the composite material crushing apparatus 100 to the place where the composite material 200 is arranged without carrying the long composite material 200 to be crushed to the place where the composite material crushing apparatus 100 is installed. It is thus possible to reduce the cost in carrying the composite material 200 to the place where the composite material crushing apparatus 100 is installed.

### [Second Embodiment]

Next, a composite material crushing apparatus 100A according to the second embodiment of the present disclosure will be described with reference to the drawings. The present embodiment is a modified example for the first embodiment and is the same as the first embodiment except as specifically described below, and the description thereof will be omitted below.

In the composite material crushing apparatus 100 of the first embodiment, The cutting part 20 cuts the composite material 200 along the conveying direction TD by cutting members 21 provided at a plurality of positions in the width direction WD. In contrast, the composite material crushing apparatus 100 A of the present embodiment cuts the composite material 200 along the width direction WD by moving the cutting member 21 A along the width direction WD.

Fig. 6 is a partial sectional view illustrating the watercraft 1 having the composite material crushing apparatus 100A according to the second embodiment of the present disclosure. Fig. 7 is a plan view of the composite material crushing apparatus 100A illustrated in Fig. 6 when viewed from above. As illustrated in Fig. 6 and Fig. 7, the composite material crushing apparatus 100A has a cutting part 20A fixed to the body 2 at a predetermined position in the transport direction TD.

The cutting part 20A is a device that cuts (divides) the composite material 200 into pieces (for example, the length thereof in the transport direction TD is 5 m or less). As illustrated in Fig. 7, the cutting part 20A has a plurality of cutting members 21A extending in the width direction WD. The cutting members 21A are configured to move along the width direction WD. Each cutting member 21A is, for example, a rounded circular saw that is rotated about an axis or a belt-like band saw that is rotated about an axis.

The cutting part 20A is fixed to the body 2 at a predetermined position in the transport direction TD. The composite material 200 conveyed along the transport direction TD by the conveying part 10 is cut at a plurality of positions in the transport direction TD along the width direction WD by the cutting members 21A when passing through the cutting part 20A fixed at the predetermined position in the transport direction TD. In such a way, the cutting part 20A cuts the composite material 200 at a plurality of positions in the transport direction TD by the cutting members 21A and thereby divides the composite material 200 into a plurality of pieces 201.

Note that, since the cutting part 20A is fixed to the body 2 at a predetermined position in the transport direction TD, it is desirable to temporarily suspend the motion in the transport direction TD of the composite material 200 performed by the conveying part 10 when the composite material 200 is being cut by the cutting members 21A.

Further, a motion mechanism (not illustrated) that moves the cutting part 20A along the transport direction TD may be provided. In such a case, if the cutting part 20A is moved along the transport direction TD at the same speed as the composite material 200, it is not necessary to temporarily suspend the motion in the transport direction TD of the composite material 200 performed by the conveying part 10 when the composite material 200 is being cut by the cutting part 20A. That is, the composite material 200 may be cut by the cutting part 20A while the composite material 200 is being moved by the conveying part 10.

Further, in the present embodiment, a modified example may be employed in which turning mechanisms 60 that turn the orientation of the pieces 201 of the composite material 200 conveyed by the conveying part 10 both downstream in the transport direction TD of the cutting part 20A and upstream in the transport direction TD of the crushing part 30 is provided. Fig. 8 to Fig. 10 are plan views illustrating this modified example for the second embodiment of the present disclosure.

As illustrated in Fig. 8 to Fig. 10, the turning mechanism 60 of the modified example for the present embodiment has a first rotary bar 61 and a second rotary bar 62 arranged downstream in the transport direction TD from the first rotary bar 61. The first rotary bar 61 and the second rotary bar 62 are fixed to the body 2 at predetermined positions in the transport direction TD. The first rotary bar 61 and the second rotary bar 62 are members installed so as to extend in the horizontal direction above the belt 12. The directions in which the first rotary bar 61 and the second rotary bar 62 extend are fixed at predefined angles relative to the transport direction TD.

As illustrated in Fig. 8 to Fig. 10, in the width direction WD, the position of a tip 62a of the second rotary bar 62 is a position closer to the center in the width direction WD of the belt 12 than a tip 61a of the first rotary bar 61. That is, the position of the tip 62a of the second rotary bar 62 more protrudes toward the center in the width direction WD of the belt 12 than the position of the tip 61a of the first rotary bar 61.

Fig. 8 to Fig. 10 illustrate a temporal change of the orientation of the piece 201 of the composite material 200 conveyed by the conveying part 10 from upstream in the transport direction TD. As illustrated in Fig. 8, the piece 201 first comes into contact with the tip 61a of the first rotary bar 61 and is rotated clockwise on the belt 12 into the state illustrated in Fig. 9.

After the state illustrated in Fig. 9 is obtained, the piece 201 comes into contact with the tip 62a of the second rotary bar 62 and is rotated clockwise on the belt 12 into the state illustrated in Fig. 10. As described above, by causing the piece 201 to come into contact with the first rotary bar 61 and the second rotary bar 62 while conveying the piece 201 by the conveying part 10, it is possible to turn the orientation of the piece 201 relative to the transport direction TD by substantially 90 degrees.

By using the turning mechanism 60 to turn the orientation of the piece 201 relative to the transport direction TD by substantially 90 degrees, it is possible to have a shorter length in the width direction WD of the piece 201. This makes it possible to reliably arrange the piece 201 at the center in the width direction WD on the belt 12 and improve the crushing efficiency in the crushing part 30. Further, for example, when a region in the width direction WD that can be crushed by the crushing part 30 is predefined, it is possible to reliably transport the piece 201 to the region in the width direction WD that can be crushed by the crushing part 30.

Although the first rotary bar 61 and the second rotary bar 62 are fixed at angles predefined relative to the transport direction TD in the above description, other forms may be employed. For example, the first rotary bar 61 and the second rotary bar 62 may be rotated counterclockwise. In such a case, the angle at which the piece 201 can be rotated by a single rotary bar can be increased. Further, the number of rotary bars may be any number of one or greater without being limited to two.

### [Third Embodiment]

Next, a composite material crushing apparatus according to the third embodiment of the present disclosure will be described with reference to the drawings. The present embodiment is a modified example for the first embodiment and the second embodiment and is the same as the first embodiment and the second embodiment except as specifically described below, and the description thereof will be omitted below.

The composite material crushing apparatus of the present embodiment has a destruction part 70 that partially destroys the composite material 200 cut by the cutting part 20 before supplied to the crushing part 30. Fig. 11 is a plan view of the destruction part 70 of the composite material crushing apparatus according to a first example of the third embodiment of the present disclosure when viewed from above. Fig. 12 is a plan view of the destruction part 70 of the composite material crushing apparatus according to a second example of the third embodiment of the present disclosure when viewed from above. Fig. 13 is a sectional view viewed along the line A-A illustrating the destruction part 70 of Fig. 12.

The destruction parts 70 illustrated in Fig. 11 and Fig. 12 have the same structure. The destruction part 70 illustrated in Fig. 11 is arranged downstream of the cutting part 20 and upstream of the crushing part 30 of the first embodiment. The conveying part 10 illustrated in Fig. 11 transports the piece 201 cut by the cutting part 20 to the destruction part 70. Further, the conveying part 10 illustrated in Fig. 11 conveys the piece 201 destroyed by the destruction part 70 to the crushing part 30.

The destruction part 70 illustrated in Fig. 12 is arranged downstream of the cutting part 20A and upstream of the crushing part 30 of the second embodiment. The conveying part 10 illustrated in Fig. 12 conveys the piece 201 cut by the cutting part 20A to the destruction part 70. Further, the conveying part 10 illustrated in Fig. 12 conveys the piece 201 destroyed by the destruction part 70 to the crushing part 30.

As illustrated in Fig. 13, the destruction part 70 is, for example, a water jet injection device that partially destroys the piece 201 of the composite material 200 by a water flow. The destruction part 70 illustrated in Fig. 13 has both a first injection part 71 that can move in the width direction WD and a second injection part 72 that can move in the vertical direction VD. The first injection part 71 and the second injection part 72 are mounted on a gate-shaped casing 73 arranged so as to cover the conveying part 10.

The first injection part 71 partially destroys the piece 201 by injecting a water flow W1 from above to below in the vertical direction VD at any position in the width direction WD. For example, the first injection part 71 forms, in the piece 201, a through hole penetrating the piece 201 along the vertical direction VD.

The second injection part 72 partially destroys the piece 201 by injecting a water flow W2 along the width direction WD at any position in the width direction WD. For example, the second injection part 72 forms, in the piece 201, a through hole penetrating the piece 201 along the width direction WD. Note that the destruction part 70 may have only any one of the first injection part 71 and the second injection part 72.

The destruction part 70 of the present embodiment may be a destruction part 70A of a modified example illustrated in Fig. 14. As illustrated in Fig. 14, the destruction part 70A of the modified example has an injection part 71A that injects a water flow W and an arch-shaped casing 73A arranged so as to cover the conveying part 10. The injection part 71A is mounted on the casing 73A.

The injection part 71A of the destruction part 70A of the modified example can move along the inner circumferential surface of the casing 73A. As illustrated in Fig. 14, the injection part 71A injects the water flow W from any position in the width direction WD and forms a through hole in the piece 201.

In the composite material crushing method of the present embodiment, a destruction step of partially destroying the piece 201 by the destruction part 70, 70A is performed between step S103 (cutting step) and step S105 (crushing step) of the first embodiment. In the composite material crushing method of the present embodiment, a first transport step of transporting the piece 201 cut by step S103 (cutting step) from the cutting part 20, 20A to the destruction part 70, 70A and a second transport step of transporting the piece 201 partially destroyed by the destruction step from the destruction part 70, 70A to the crushing part 30 are performed.

According to the composite material crushing apparatus of the present embodiment, since the piece 201 cut by the cutting part 20, 20A is partially destroyed by the destruction part 70, 70A, the crushing efficiency of the piece 201 by the crushing part 30 can be increased, and the composite material 200 can be more reliably reduced in volume.

Although the destruction parts 70, 70A each are a water jet injection device in the above description, other forms may be employed. For example, a press machine that destroys the piece 201 by a pressure may be used as the destruction part 70, 70A. Further, a device having a crusher that clamps and destroys the piece 201 may be used.

### [Fourth Embodiment]

Next, a composite material crushing apparatus 100B according to the fourth embodiment of the present disclosure will be described with reference to the drawings. The present embodiment is a modified example for the first embodiment and the second embodiment and is the same as the first embodiment and the second embodiment except as specifically described below, and the description thereof will be omitted below.

The composite material crushing apparatus 100 of the first embodiment cuts the composite material 200 by using the cutting part 20 to cut the composite material 200 into the pieces 201. In contrast, the composite material crushing apparatus 100B of the present embodiment blows up the composite material 200 with an explosive by an explosive part 80 to divide the composite material 200.

Fig. 15 is a plan view of the composite material crushing apparatus 100B according to the fourth embodiment of the present disclosure when viewed from above. As illustrated in Fig. 15, in the composite material crushing apparatus 100B of the present embodiment, the explosive part (dividing part) 80 is arranged upstream in the transport direction TD of the conveying part 10. The explosive part 80 has a casing 81 that accommodates the composite material 200 in which explosives B are installed.

In the casing 81, an ignition mechanism (not illustrated) that ignites the explosives B is provided. The explosive part 80 ignites the explosives B to divide the composite material 200 into a plurality of pieces 201. The casing 81 is for protection to prevent an impact due to ignition of the explosives B from propagating to outside.

The pieces 201 divided from the composite material 200 by the explosive part 80 are conveyed from the explosive part 80 to the crushing part 30 by the conveying part 10. The crushing part 30 crushes the pieces 201 conveyed from the conveying part 10 and supplies the pieces 201 to the collection part 50.

According to the composite material crushing apparatus 100B of the present embodiment, the long composite material 200 can be blown up and divided by the explosives B, and pieces crushed by the crushing part 30 can be obtained.

### [Fifth Embodiment]

Next, a composite material crushing apparatus 100C according to the fifth embodiment of the present disclosure will be described with reference to the drawings. The present embodiment is a modified example for the first embodiment and is the same as the first embodiment except as specifically described below, and the description thereof will be omitted below. The composite material crushing apparatus 100C of the present embodiment has a heating part 90 that heats the composite material 200 cut by the cutting part 20.

As illustrated in Fig. 16, the heating part 90 has a casing 91 arranged so as to cover the conveying part 10 and a heater 92 installed inside the casing 91. The heater 92 is a device that heats the resin material, which is contained in the composite material 200 installed on the belt 12 of the conveying part 10, to a softening temperature or higher. The heater 92 heats the resin material contained in the composite material 200 to the softening temperature or higher to soften the resin material.

Although the heater 92 can generate heat by electric power, other forms may be employed. For example, exhaust heat may be collected from the internal combustion engine 3 and used as the heat source of the heater 92. Further, an incinerator that incinerates fragments of the composite material 200 collected by the collection part 50 may be provided, and heat generated by the incinerator may be collected to be used as the heat source of the heater 92. Further, any other heat sources may be used as the heat source of the heater 92.

According to the composite material crushing apparatus 100C of the present embodiment, since the composite material 200 whose resin material has been softened after heated by the heating part 90 is cut by the cutting part 20, the load required for cutting the composite material 200 by the cutting part 20 can be reduced, and the composite material 200 can be reliably cut into the pieces 201.

### [Sixth Embodiment]

Next, a composite material crushing apparatus 100D according to the sixth embodiment of the present disclosure will be described with reference to the drawings. The present embodiment is a modified example for the first embodiment and is the same as the first embodiment except as specifically described below, and the description thereof will be omitted below.

The composite material crushing apparatus 100 of the first embodiment guides the pieces 201 of the composite material 200 downward along the vertical direction VD by the conveying guide 40 and crushes the pieces 201 by the crushing part 30 installed above the collection part 50. In contrast, the composite material crushing apparatus 100D of the present embodiment has a crushing part 30D arranged on the extension line of the transport direction TD of the conveying part 10.

As shown in Fig. 17, the composite material crushing apparatus 100D of the present embodiment has a crushing part 30D. The crushing part 30D is a device for crushing pieces 201 conveyed by the conveying part 10. The crushing part 30D has a pair of gripping rollers 31D rotating in opposite directions to each other and a pair of crushing rollers 32D rotating in opposite directions to each other. The pair of gripping rollers 31D rotate while gripping the piece 201 of the composite material 200 conveyed by the conveying part 10, and push the piece 201 into the pair of gripping rollers 32D.

The pair of crushing rollers 32D form a device that crushes the pieces 201 of the composite material 200, which have been pushed by the pair of gripping rollers 31D. The pair of crushing rollers 32D are provided with a plurality of claws (not illustrated) on their outer circumferential surfaces and collapse and thereby crush the pieces 201 of the composite material 200 by the plurality of claws. The pieces 201 of the composite material 200, which have been crushed by the crushing part 30D, are collected by the collection part 50D.

According to the composite material crushing apparatus 100D of the present embodiment, since the crushing part 30D is arranged on the extension line of the transport direction TD of the conveying part 10, it is possible to convey the pieces 201 of the composite material 200 to the crushing part 30D without changing the transport direction TD provided by the conveying part 10 and crush the pieces 201 by the crushing part 30D.

The composite material crushing apparatus according to the present embodiments described above are understood as follows, for example.

A composite material crushing apparatus (100) according to the present disclosure includes: a dividing part (20) configured to divide a long composite material (200) into pieces, the composite material being formed of a resin material containing a fiber base material; a conveying part (10) configured to convey the pieces divided by the dividing part; and a crushing part (30) configured to crush the pieces conveyed by the conveying part.

According to the composite material crushing apparatus of the present disclosure, a long composite material is divided into pieces by the dividing part. The pieces of the composite material, which have been divided by the dividing part, are conveyed to the crushing part by the conveying part and crushed by the crushing part. Since the composite material divided into pieces can be conveyed to and crushed by the crushing part, it is possible to sufficiently reduce the volume of the long composite material without increasing costs.

In the composite material crushing apparatus according to the present disclosure, the dividing part may be configured to divide the composite material by using a cutting member (21) to cut the composite material.

According to the composite material crushing apparatus of the present configuration, a long composite material can be divided by the cutting member into pieces to be crushed by the crushing part.

In the composite material crushing apparatus according to the present disclosure, the dividing part may be configured to divide the composite material by using an explosive to blow up the composite material.

According to the composite material crushing apparatus of the present configuration, a long composite material can be blown up and divided by an explosive, and thereby pieces to be crushed by the crushing part can be obtained.

The composite material crushing apparatus according to the present disclosure may be configured to include a destruction part (70) arranged downstream in the transport direction from the dividing part and configured to partially destroy the pieces divided by the dividing part, and the conveying part may be configured to convey the pieces divided by the dividing part to the destruction part and convey the pieces destroyed by the destruction part to the crushing part.

According to the composite material crushing apparatus of the present configuration, since pieces divided by the dividing part are partially destroyed by the destruction part, the crushing efficiency of pieces by the crushing part can be increased, and the composite material can be more reliably reduced in volume.

The composite material crushing apparatus according to the present disclosure may be configured to include a heating part (90) configured to heat the composite material to be divided by the dividing part to soften the resin material.

According to the composite material crushing apparatus of the present configuration, since the composite material whose resin material has been softened after heated by the heating part is divided by the dividing part, the load required for dividing the composite material by the dividing part can be reduced, and the composite material can be reliably cut into the pieces.

The moving parts according to the present embodiments described above are understood as follows, for example.

A moving part (1) according to the present disclosure includes: the composite material crushing apparatus according to any one of the above; a body (2) in which the composite material crushing apparatus is installed; and a thrust generation part (3) configured to generate thrust for moving the body.

According to the moving part of the present disclosure, it is possible to move the composite material crushing apparatus to the place where the composite material is arranged without carrying the long composite material to be crushed to the place where the composite material crushing apparatus is installed. It is thus possible to reduce the cost in carrying the composite material to the place where the composite material crushing apparatus is installed.

The composite material crushing methods according to the present embodiments described above are understood as follows, for example.

A composite material crushing method according to the present disclosure includes: a dividing step (S 103) of dividing a long composite material into pieces, the composite material being formed of a resin material containing a fiber base material; a transport step (S 104) of transporting the pieces divided by the dividing step; and a crushing step (S 105) of crushing the pieces transported by the transport step.

According to the composite material crushing method of the present disclosure, a long composite material is divided into pieces by the dividing part. The pieces of the composite material, which have been divided by the dividing step, are transported to the crushing part by the transport step and crushed by the crushing step. Since the composite material divided into pieces can be crushed by the crushing step, it is possible to sufficiently reduce the volume of the long composite material without increasing costs.

In the composite material crushing method according to the present disclosure, the dividing step may be configured to divide the composite material by using a cutting member (21) to cut the composite material.

According to the composite material crushing method of the present configuration, a long composite material can be divided by the cutting member into pieces to be crushed by the crushing step.

In the composite material crushing method according to the present disclosure, the dividing step may be configured to divide the composite material by using an explosive to blow up the composite material.

According to the composite material crushing method of the present configuration, a long composite material can be blown up and divided by an explosive, and thereby pieces to be crushed by the crushing step can be obtained.

The composite material crushing method according to the present disclosure may be configured to include a destruction step of partially destroying the pieces divided by the dividing step, and the transport step may be configured to have a first transport step of transporting the pieces divided by the dividing step and a second transport step of transporting the pieces destroyed by the destruction step.

According to the composite material crushing method of the present configuration, since pieces divided by the dividing step are partially destroyed by the destruction step, the crushing efficiency of pieces by the crushing step can be increased, and the composite material can be more reliably reduced in volume.

The composite material crushing method according to the present disclosure may be configured to include a heating step of heating the composite material to be divided by the dividing step to soften the resin material.

According to the composite material crushing method of the present configuration, since the composite material whose resin material has been softened after heated by the heating step is divided by the dividing step, the load required for dividing the composite material by the dividing step can be reduced, and the composite material can be reliably divided into the pieces.

### [Reference Signs List]

- 1: watercraft (moving part)
- 2: body
- 3: internal combustion engine (thrust generation part)
- 10: conveying part
- 11: roller
- 12: belt
- 20, 20A: cutting part (dividing part)
- 21, 21A: cutting member
- 30, 30D: crushing part
- 31, 31D: gripping roller
- 32, 32D: crushing roller
- 40: conveying guide
- 50, 50D: collection part
- 60: turning mechanism
- 61: first rotary bar
- 62: second rotary bar
- 70, 70A: destruction part
- 80: explosive part (dividing part)
- 81: casing
- 90: heating part
- 100, 100A, 100B, 100C, 100D: composite material crushing apparatus
- 200: composite material
- 201: piece
- B: explosive
- TD: transport direction
- VD: vertical direction
- W, W1, W2: water flow
- WD: width direction

## Claims

1. A composite material crushing apparatus comprising:
a dividing part configured to divide a long composite material into pieces, the composite material being formed of a resin material containing a fiber base material;
a conveying part configured to convey the pieces divided by the dividing part; and
a crushing part configured to crush the pieces conveyed by the conveying part.

2. The composite material crushing apparatus according to claim 1, wherein the dividing part divides the composite material by using a cutting member to cut the composite material.

3. The composite material crushing apparatus according to claim 1, wherein the dividing part divides the composite material by using an explosive to blow up the composite material.

4. The composite material crushing apparatus according to any one of claims 1 to 3 further comprising a destruction part arranged downstream in a transport direction of the composite material from the dividing part and configured to partially destroy the pieces divided by the dividing part,
wherein the conveying part conveys the pieces divided by the dividing part to the destruction part and conveys the pieces destroyed by the destruction part to the crushing part.

5. The composite material crushing apparatus according to any one of claims 1 to 4 further comprising a heating part configured to heat the composite material to be divided by the dividing part to soften the resin material.

6. A moving unit comprising:
the composite material crushing apparatus according to any one of claims 1 to 5;
a body in which the composite material crushing apparatus is installed; and
a thrust generation part configured to generate thrust used to move the body.

7. A composite material crushing method comprising:
a dividing step of dividing a long composite material into pieces, the composite material being formed of a resin material containing a fiber base material;
a transport step of transporting the pieces divided by the dividing step; and
a crushing step of crushing the pieces transported by the transport step.

8. The composite material crushing method according to claim 7, wherein the dividing step is to divide the composite material by using a cutting member to cut the composite material.

9. The composite material crushing method according to claim 7, wherein the dividing step is to divide the composite material by using an explosive to blow up the composite material.

10. The composite material crushing method according to any one of claims 7 to 9 further comprising a destruction step of partially destroying the pieces divided by the dividing step,
wherein the transport step has a first transport step of transporting the pieces divided by the dividing step and a second transport step of transporting the pieces destroyed by the destruction step.

11. The composite material crushing method according to any one of claims 7 to 10 further comprising a heating step of heating the composite material to be divided by the dividing step to soften the resin material.
